(19) Europäisches Patentamt
European Patent Office
Office européen des brevets

(11) **EP 1 909 399 A1**

(12) **EUROPEAN PATENT APPLICATION**

(43) Date of publication:
**09.04.2008 Bulletin 2008/15**

(51) Int Cl.:
***H04B 1/10*** *(2006.01)*

(21) Application number: **06425685.2**

(22) Date of filing: **06.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **STMicroelectronics S.r.l.**
**20041 Agrate Brianza (Milano) (IT)**

(72) Inventor: **Adduci, Francesco**
**20041 Agrate Brianza (MI) (IT)**

(74) Representative: **Perani, Aurelio et al**
**Perani Mezzanotte & Partners**
**Piazza San Babila, 5**
**20122 Milano (IT)**

(54) **Detecting and suppressing spike noise in a received broadcast signal by use of the Teager-Kaiser operator**

(57)     The present invention concerns a method and an apparatus for identifying and suppressing shot or spike noise in a broadcast signal.

A feature of the noise identification method in a modulated digital signal (s(n)) is that of applying a non-linear Teager-Kaiser function ($\Psi$) to said noise-corrupted modulated digital signal (s(n)) so to generate a first signal ($s_1\Psi(n)$, $s_3\Psi(n)$) having a first component ($s_1\Psi(n)_1$, $s_3\Psi(n)_1$), representative of the energy content ($\Theta_s$) of said noise-corrupted modulated digital signal (s(n)), and a second component ($s_1\Psi(n)_2$, $s_3\Psi(n)_2$) able to identify a time instant ($T=t_h\pm i$) in which there is spike noise in said noise-corrupted digital signal (s(n)).

FIG.4

**Description**

The present invention refers to a method and apparatus for suppressing noise in a broadcast signal, particularly to a method and apparatus for identifying and suppressing shot or spike noise in a broadcast signal.

The present invention moreover refers to a radio receiver using said apparatus.

It is known that the noise present in a communication system can be external, i.e. originating from sources which are outside the considered circuits, or internal, i.e. originating from physical phenomena which intervene inside the apparatus itself.

In both cases, noise is a randomly-occurring and unpredictable phenomenon which adds itself to the broadcast electrical signal, lowering its information content and thus preventing the detection, upon reception, of the entire set of transmitted information.

In particular, the broadcast signals are affected by various noise typologies, including noise of spike type, shot or pulse type (below referred to as spike noise for the sake of brevity). Such spike noise can cause disturbances both during the processing and during the use of the signal itself.

An example of spike noise on a broadcast signal is that introduced by the electrical interferences caused by a car motor, which are in particular capable of disturbing the broadcast signal output from the speakers which are operatively associated with a car radio.

It should be noted that car radios are particularly sensitive to spike noise generated by the motor injection system, since they are found in the immediate vicinity of the motor itself. Indeed, the spark plugs of the injection system can create a pulse of very brief duration which can overlap the broadcast signal, such pulse being capable of degrading the quality of the signal output from the loudspeakers to a non-acceptable level.

In particular, it should be noted that the spike noise is particularly damaging in digital signals, in which, due to its potential amplitude, the noise is capable of introducing recognition errors which often affect sequences of several binary digits (burst errors).

There is the particularly strong need, therefore, for removing the noise spike in a digital signal.

The effects of the noise, therefore, must be at least theoretically eliminated, or at the most attenuated during the process of demodulation of a digital signal such to permit a correct reconstruction of the broadcast signal.

For example, the document DE 4127070 discloses a system for suppression of the spike noise having a circuitry capable of identifying the presence and amplitude of the pulse and controlling the transmission output by the system.

Such system, even if it has definitely advantageous features, nevertheless requires several filtering stages as well as implementing specific software which is particularly burdensome from the computational complexity standpoint, such that high quantities of memory must be employed since it is only applicable for the treatment of the already demodulated signal and therefore in baseband.

In view of the above mentioned prior art, object of the present invention is that of implementing a method and an apparatus - free of the problems of the above-indicated prior art - for removing shot or spike noise from a broadcast signal picked up in antennas, operating before the demodulation and hence in the radio frequency band.

In accordance with the present invention, such object is achieved by means of a method for identifying spike noise in a digital signal in accordance with claim 1 and with a method for suppressing spike noise in a digital signal in accordance with claim 5.

This object is also achieved by an apparatus for suppressing spike noise in a modulated digital signal in accordance with claim 12.

Furthermore, this object is also achieved by a receiver provided with an apparatus for suppressing spike noise in a modulated digital signal in accordance with claim 18.

Furthermore this object is also achieved by a multimedia portable device provided with a receiver having the apparatus for suppressing the spike noise in a modulated digital signal in accordance with claim 19.

Finally, this object is also achieved by means of a computer product which, once loaded in the memory of a processor and made to run on such processor, permits carrying out the method in accordance with the present invention.

Thanks to the present invention, it is possible to obtain a method and apparatus capable of identifying the exact time position of the samples corrupted by noise by using simpler instructions with respect to the prior art.

Moreover, it is possible to obtain an apparatus capable of suppressing the samples corrupted by spike noise and substituting them with uncorrupted samples, in order to reconstruct the originally transmitted signal free of spike noise.

A further advantageous feature of the present invention is that of obtaining a radio receiver equipped with apparatus for suppressing the spike noise, whose manufacturing and implementation cost is considerably lower than that of the radio receivers according to prior art.

The characteristics and advantages of the present invention will appear from the following detailed description of a practical embodiment, illustrated as a nonlimiting example in the set of drawings, in which:

- Figures 1, 2 and 3 show different explanatory schematic diagrams of the method for identifying samples corrupted by spike noise in a modulated digital signal, in accordance with the present invention;
- Figure 4 shows an explanatory schematic diagram of the method for suppressing the samples corrupted by spike noise in accordance with the present invention;
- Figure 5 shows a block schematic diagram of a receiver provided with an apparatus for identifying and suppressing the samples corrupted by noise in a digital signal, in accordance with the present invention;
- Figure 6 shows a block diagram of a possible embodiment of a circuit of the apparatus made in the receiver illustrated in Figure 5.

In the course of the present description, use will be made of the non-linear $\Psi$ Teager-Kaiser operator (or function), which is, for example, described in the document "On a Simple Algorithm to Calculate the Energy of a Signal" by James F. Kaiser, PROC. ICASSP, Vol. S7.3, pps. 381-384, 1990, incorporated here for reference.

The non-linear Teager-Kaiser operator is then an algorithm capable of calculating the "energy" of a signal.

Such algorithm therefore produces, as a result of its processing, a value which has shown to be directly correlated with the "energy" of the signal being analysed.

Below, the definition of non-linear Teager-Kaiser operator will be illustrated in order to make the subsequent description of the invention clearer.

The non-linear Teager-Kaiser operator is defined by the following relation (1):

$$\Psi\left[x(n\cdot T)\right] = \left(\frac{\partial}{\partial(n\cdot T)}x(n\cdot T)\right)^2 - x(n\cdot T)\cdot\left(\frac{\partial^2}{\partial(n\cdot T)^2}x(n\cdot T)\right)$$

where x(nT) represents a discrete, time variable signal, defined by a plurality of samples. Using the general property of derivatives in the discrete domain and maintaining the coherence between the samples with the primitive function and its derivatives, it is possible to obtain by removing the notion of time T that:

$$\overset{\circ}{x}(n) = \frac{x(n+1)-x(n-1)}{2}$$

or

$$\overset{\circ}{x}(n) = x(n+1)-x(n)$$

and

$$\overset{\circ\circ}{x}(n) = x(n+1)+x(n-1)-2\cdot x(n)$$

So to be able to rewrite (1) in a more compact form (2) illustrated below:

$$\Psi\left[x(n)\right] = \left[x(n+1)-x(n)\right]^2 - x(n+1)\cdot\left[x(n+1)+x(n-1)-2\cdot x(n)\right]$$

or (3):

$$\Psi\left[x(n)\right] = [x(n)]^2 - x(n+1)\cdot x(n-1)$$

It should be pointed out that the digital signal x(n), derived from the corresponding analog signal x(t), is an ideal signal which lacks of noise.

Nevertheless, in a real communication system, noise is always present, a random and unpredictable component such to be added to the radio frequency modulated signal x(t), the noise being capable of degrading the information content and preventing the detection, on reception, of the entire set of the transmitted information. Such noise-corrupted analog signal will be indicated below as s(t).

As is known, a receiver, for example car radio receiver, is capable of receiving a modulated analog radio frequency signal s(t), which can be an AM modulated signal or an FM modulated signal, filtering it and converting it into a digital signal s(n) by means of analog-digital converter means having a sampling frequency $f_s$, processing such digital signal in order to demodulate the received modulated signal s(t). If the noise present in the modulated analog signal s(t) and hence in the corresponding modulated digital signal s(n) is particularly high, such noise is capable of degrading the quality of the signal output from the loudspeakers to an unacceptable level.

### Spike noise identification in a digital signal s(n)

With reference to the attached figures, the inventive method for identifying noise, in particular spike noise, in a modulated digital signal s(n) comprises the step of:

- applying the non-linear function Teager-Kaiser $\Psi$ to said noise-corrupted modulated digital signal s(n) for generating a first signal $s_1\Psi(n)$, $s_3\Psi(n)$ having a first component $s_1\Psi(n)_1$, $s_3\Psi(n)_1$, representative of the energy content $\Theta_S$ of said noise-corrupted modulated digital signal s(n), and a second component $s_1\Psi(n)_2$, $s_3\Psi(n)_2$ able to identify at least one time position $T=t_h\pm i$ in which there is spike noise in said digital signal corrupted by noise s(n).

The method may comprise the further steps of:

- processing said noise-corrupted modulated digital signal s(n) for generating a derivative signal s'(n) representative of the derivative of said digital signal corrupted by noise s(n);
- apply said non-linear function Teager-Kaiser $\Psi$ to said derivative signal s'(n) to generate a second signal $s_2\Psi(n)$, $s_4\Psi(n)$ having a third component $s_2\Psi(n)_1$, $s_4\Psi(n)_1$, representative of the energy content $\Theta_s$' of the derivative of said noise-corrupted digital signal s'(n), and a fourth component $s_2\Psi(n)_2$, $s_4\Psi(n)_2$ able to identify at least one time position $T=t_h\pm i$ in which there is spike noise in said noise-corrupted digital signal s'(n).

It should be indicated that the noise-corrupted modulated digital signal s(n) is composed of a series of samples "N" able to identify a carrier signal oscillating at a carrier frequency $f_c$ and a modulating signal.

Two possible scenarios will now be illustrated to support the result of the previously described inventive method.

### Scenario 1

A possible representation form of the noise-corrupted digital signal is the following:

$$s(n) = x(n) + c_{1,2}(n)$$

i.e. the noise-corrupted digital signal s(n) is given by the sum of the modulated digital signal without noise x(n) and by the noise $c(n)=c_{1,2}(n)$, where $c_{1,2}(n)$ represents two different noise models.

It should be underlined that the modulated digital signal x(n) lacking noise comprises a series of samples able to identify a carrier signal and a modulating signal, of the type having the following formulation:

$$x(n) = A\left[1 + m \cdot \sin(\Omega_a \cdot n)\right] \cdot \cos(\Omega_c \cdot n + \Omega_m \int_0^n q(v)dv + \phi)$$

where A is the amplitude of the modulated signal AM, m is the modulation index AM, $\Omega_a$ is the angular modulation frequency AM, $\Omega_c$ is the angular frequency of the carrier signal, $\Omega_m$ is the angular frequency deviation, $\vartheta(n) = \Omega_c + \Omega_m \cdot q(n)$ represents the instantaneous angular frequency, q(n) the FM modulating signal component where $|q(n)| \leq 1 \; \forall n \in \{I \geq 0\}$ with $0 \leq \Omega_c \pm \Omega_m \leq \pi$.

The representative signal of the spike noise $c_{1,2}(n)$ is instead identifiable by means of the first model:

$$c_1(n) = \sum_{h=1}^{H} C_h * e^{-\sqrt{4*|n-t_h|/t_{wh}}}$$

Or by means of the 5 following second model:

$$c_2(n) = \sum_{h=1}^{H} C_h * e^{-2*|n-t_h|/t_{wh}}$$

where H represents the maximum number of samples corrupted by noise, $t_h$ represents the appearance rate of the corrupted samples, $t_{wh}$ represents the time constant of each corrupted sample and $C_h$ represents the amplitude of the corrupted samples.

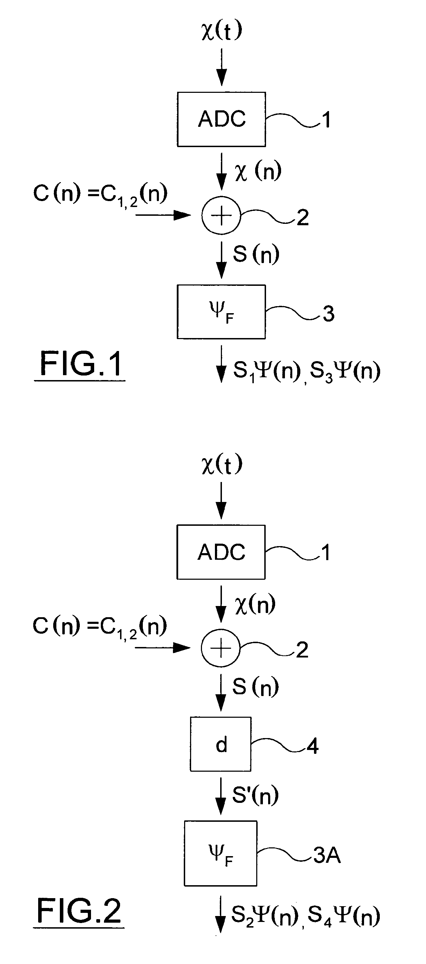

With reference to figure 1, it is inferred that by spike-noise identification there is a first step 1 (which is optional if the digital signal s(n) is already available), in which the analog signal x(t) is converted into a time-invariant discrete signal x(n) by means of analog-digital conversion means 1, which can be implemented for example in software and/or hardware manner, to which a signal c(n) representative of the spike is added by means of an adder node 2, which for example can be implemented in software and/or hardware manner, for generating s(n) spike noise-corrupted modulated digital signal.

Subsequently, in order to identify the spike noise in the digital signal s(n), a processing step 3 is foreseen, during which the non-linear function Teager-Kaiser $\Psi$, it too implementable in software and/or hardware manner, is applied to said noise-corrupted modulated digital signal s(n).

The result of such step 3 is that of generating the first signal $s_1\Psi(n)$, $s_3\Psi(n)$ comprising:

- the first component $s_1\Psi(n)_1$, $s_3\Psi(n)_1$ representative of the energy content $\Theta_s$ of said noise-corrupted modulated digital signal;
- the second component $s_1\Psi(n)_2$, $s_3\Psi(n)_2$ able to identify at least one sample "n" in a time instant $T = t_h \pm i$ in which there is spike noise in said noise-corrupted digital signal s(n).

In particular, it is noted that step 3, in the case in which the first noise model $c_1(n)$ is adopted, gives rise to a digital signal $s_1\Psi(n)$ of the type illustrated below:

$$\Psi_F\left[x(n)+c_1(n)\right]=\Psi_F\left[x(n)\right]+\Psi_F\left[c_1(n)\right]+2\cdot\Psi_F\left[x(n),c_1(n)\right]=$$

$$=\Psi_F\left[A\cdot\left(1+m\cdot\sin(\Omega_a\cdot n)\right)\cdot\cos\left(\Omega_c\cdot n+\Omega_m\cdot\int_0^n q(v)\cdot dv+\phi\right)\right]+\Psi_F\left[\sum_{h=1}^{H}C_h\cdot e^{-\sqrt{\frac{4\cdot|n-t_h|}{t_{wh}}}}\right]+2\cdot\Psi\left[x(n),c_1(n)\right]=$$

$$=A^2\cdot\left(1+m\cdot\sin(\Omega_a\cdot n)\right)^2\cdot\sin^2\left(\Omega_c+\Omega_m\cdot q(n)\right)+$$

$$+\sum_{h=1}^{H}2\cdot C_h^2\cdot e^{-\left[\sqrt{\frac{4\cdot|n-t_h|}{t_{wh}}}+\sqrt{\frac{|n-t_h-1|}{t_{wh}}}+\sqrt{\frac{|n-t_h+1|}{t_{wh}}}\right]}\cdot\sinh\left(\sqrt{\frac{|n-t_h-1|}{t_{wh}}}+\sqrt{\frac{|n-t_h+1|}{t_{wh}}}-\sqrt{\frac{4\cdot|n-t_h|}{t_{wh}}}\right)+$$

$$+2\cdot\Psi\left[x(n),c_1(n)\right]\approx s_1\Psi(n)=s_1\Psi(n)_1+s_1\Psi(n)_2\approx$$

$$\approx A^2\cdot\left(1+m\cdot\sin(\Omega_a\cdot n)\right)^2\cdot\sin^2\left(\Omega_c+\Omega_m\cdot q(n)\right)+$$

$$+2\cdot\sum_{h=1}^{H}C_h^2\cdot\left\{\begin{array}{l}e^{-\frac{2}{\sqrt{t_{wh}}}}\cdot\sinh\left(\frac{2}{\sqrt{t_{wh}}}\right)\cdot\delta(n-t_h)+\\[2mm]+e^{-\frac{\sqrt{2}+2}{\sqrt{t_{wh}}}}\cdot\sinh\left(\frac{\sqrt{2}-2}{\sqrt{t_{wh}}}\right)\cdot\left[\delta(n-t_h-1)+\delta(n-t_h+1)\right]+\\[2mm]+e^{-\left[\frac{\sqrt{3}+1+2\cdot\sqrt{2}}{\sqrt{t_{wh}}}\right]}\cdot\sinh\left(\frac{\sqrt{3}+1-2\cdot\sqrt{2}}{\sqrt{t_{wh}}}\right)\cdot\left[\delta(n-t_h-2)+\delta(n-t_h+2)\right]+\\[2mm]+e^{-\left[\frac{2+\sqrt{2}+2\cdot\sqrt{3}}{\sqrt{t_{wh}}}\right]}\cdot\sinh\left(\frac{2+\sqrt{2}-2\cdot\sqrt{3}}{\sqrt{t_{wh}}}\right)\cdot\left[\delta(n-t_h-3)+\delta(n-t_h+3)\right]+\\[2mm]+e^{-\left[\frac{\sqrt{5}+\sqrt{3}+4}{\sqrt{t_{wh}}}\right]}\cdot\sinh\left(\frac{\sqrt{5}+\sqrt{3}-4}{\sqrt{t_{wh}}}\right)\cdot\left[\delta(n-t_h-4)+\delta(n-t_h+4)\right]+\end{array}\right.$$

It should be noted that the term $\Psi_F[x(n),c_1(n)]$ is null since $x(n)$ and $c_1(n)$ are non-correlated signals.

The signal $s_1\Psi(n)$ thus comprises:

- a first component $s_1\Psi(n)_1$, representative of the energy content $\Theta_s$ of said noise-corrupted modulated digital signal, and
- a second component $s_1\Psi(n)_2$ able to identify at least one pulse in a time instant $T=t_h\pm i$ in which there is spike noise in said noise-corrupted modulated digital signal $s(n)$.

This at least one pulse is identifiable at the time instant $T=t_h\pm i$, where "i" indicates the number of pulses generated by the application of step 3 (or rather of the non-linear function Teager-Kaiser $\Psi_F$) to said noise-corrupted modulated digital signal $s(n)$.

It should be noted that the exact time position $T=t_h\pm i$ of the plurality of pulses is identified by means of the Dirac delta functions $\delta$.

In other words, among the plurality "N" of samples composing the modulated digital signal $s(n)$, it is possible to identify "n" samples corrupted by spike noise, these "n" samples being identifiable by means of the pulses represented by delta functions which are localised in the time instants $T=t_h\pm i$.

In particular, in the expression of the second component $s_1\Psi(n)_2$ nine pulses are identifiable which occur at the instants $T=t_h\pm 4i$ (with i=1...4), such pulses being able to identify the exact time position of the noise-corrupted samples "n" in said digital signal $s(n)$.

It should be underlined that nine pulses were identified since it was assumed as hypothesis to exclude all of the contributions given from the noise model to the digital signal free of noise $x(n)$ which are less than 18dB, making reference to the maximum amplitude of the pulse which occurs at time $T=t_h$.

The second component $s_1\Psi(n)_2$ is capable of providing further information, beyond that of identifying the time position of the samples "n" corrupted by spike noise.

For example, $s_1\Psi(n)_2$ is capable of identifying the number k of samples to substitute the spike noise-corrupted samples "n" in said modulated digital signal s(n), as described in more detail below.

Analogous conclusions, still with reference to figure 1, may be obtained by applying step 3 (non-linear Teager-Kaiser function $\Psi_F$) to said noise-corrupted modulated digital signal s(n) by utilising the second noise model $c_2(n)$.

[fa1][fa2][fa3]In particular, it is obtained that:

$$\Psi_F\big[x(n)+c_2(n)\big] = \Psi_F\big[x(n)\big] + \Psi_F\big[c_2(n)\big] + 2\cdot\Psi_F\big[x(n),c_2(n)\big] \approx$$

$$\approx s_3\Psi(n) = s_3\Psi(n)_1 + s_3\Psi(n)_2 \approx 2\; A^2\cdot\big(1+m\cdot\sin(\Omega_a\cdot n)\big)^2\cdot\sin^2(\Omega_c+\Omega_m\cdot q(n)) +$$

$$+2\cdot\sum_{h=1}^{H} C_h^2\cdot e^{-\frac{2}{t_{wh}}}\cdot\sinh\left(\frac{2}{t_{wh}}\right)\cdot\delta(n-t_h) \qquad\qquad 10$$

It should be pointed out that also in this case the term $\Psi_F[x(n),c_2(n)]$ is approximately null since $x(n)$ and $c_2(n)$ are non-correlated signals.

The digital signal $s_3\Psi(n)$ comprises:

- a first component $s_3\Psi(n)_1$, representative of the energy content $\Theta_s$ of said noise-corrupted modulated digital signal, identical to that previously obtained with the noise model $c_1(n)$, and
- a second component $s_3\Psi(n)_2$ able to identify at least one pulse in which there is spike noise in said noise-corrupted digital signal s(n).

Indeed, in the second component expression $s_3\Psi(n)_2$ only one pulse is identifiable at the instant $T=t_h$, such pulse being able to identify the exact time position of the spike noise-corrupted sample "n" in said digital signal s(n).

The second component $s_3\Psi(n)_2$ provides other information in addition to that of identifying the time position $T=t_h$ in which there is spike noise in said noise-corrupted modulated digital signal s(n).

For example, the component $s_3\Psi(n)_2$ provides a measure of the energy content of said spike noise in said instant $T=t_h$.

In this manner it is possible, for example, to set a threshold value $\Theta_1$ which can act as indicator of a possible suppression step of the noise-corrupted sample "n", as described in more detail below.

With reference now to figure 2, in which identical numbers are assigned to the elements already described in figure 1, it is also possible to identify the time position of the corrupted samples in the noise-corrupted modulated digital signal s(n) by means of a processing step 4 of said noise-corrupted modulated digital signal s(n) during which a derivative signal s'(n) is generated, representative of the derivative of said noise-corrupted digital signal s(n), this processing step being implementable in a software and/or hardware manner.

It is possible to optionally add a step 3A to the processing step 4; during this step 3A the non-linear Teager-Kaiser function $\Psi_F$ is applied to said derivative signal s'(n) for generating a second signal $s_2\Psi(n)$, $s_4\Psi(n)$.

In particular, in the specific form illustrated in figure 2, it is noted that, following step 3, the signal $s_2\Psi(n)$, $s_4\Psi(n)$ is generated which comprises:

- a first component $s_2\Psi(n)_1$, $s_4\Psi(n)_1$ representative of the energy content $\Theta_s'$ of said noise-corrupted modulated digital signal and
- a second component $s_2\Psi(n)_2$, $s_4\Psi(n)_2$ able to identify at least one pulse in a time position $T=t_h\pm i$ in which a sample "n" of said modulated digital signal s(n) is corrupted by spike noise.

In particular, by using the first noise model $c_1(n)$, one obtains, by applying a non-linear Teager-Kaiser $\Psi_F$ function to said derivative signal s'(n), a signal $s_2\Psi(n)$ of the type represented below:

$$\Psi_F\left[x(n+1)-x(n-1)+c_1(n+1)-c_1(n-1)\right]=$$

$$=\Psi_F\left[x(n+1)-x(n-1)\right]+\Psi_F\left[c_1(n+1)-c_1(n-1)\right]+2\cdot\Psi_F\left[x(n+1)-x(n-1),c_1(n+1)-c_1(n-1)\right]\approx$$

$$\approx\Psi_F\left[x(n+1)-x(n-1)\right]+\Psi_F\left[c_1(n+1)-c_1(n-1)\right]\approx$$

$$\approx s_2\Psi(n)=s_2\Psi(n)_1+s_2\Psi(n)_2=4\cdot A^4\cdot\left(1+m\cdot\sin(\Omega_a\cdot n)\right)^4\cdot\sin^4(\Omega_c+\Omega_m\cdot q(n))+$$

$$+\sum_{h=1}^{H}2\cdot C_h^2\cdot\left\{\begin{array}{l}\left[\left[2\cdot e^{-\frac{\sqrt{2}+2}{\sqrt{t_{wh}}}}\cdot\sinh\left(\frac{\sqrt{2}-2}{\sqrt{t_{wh}}}\right)+e^{-\frac{2}{\sqrt{t_{wh}}}}\cdot\sinh\left(\frac{2}{\sqrt{t_{wh}}}\right)-e^{-\frac{2\cdot\sqrt{2}+2}{\sqrt{t_{wh}}}}\cdot\sinh\left(\frac{2\cdot\sqrt{2}-2}{\sqrt{t_{wh}}}\right)\right]\right]\cdot\delta(n-t_h)+\\[10pt]+\left[\begin{array}{l}e^{-\frac{2}{\sqrt{t_{wh}}}}\cdot\sinh\left(\frac{2}{\sqrt{t_{wh}}}\right)+e^{-\frac{1+\sqrt{3}+2\cdot\sqrt{2}}{\sqrt{t_{wh}}}}\cdot\sinh\left(\frac{1+\sqrt{3}-2\cdot\sqrt{2}}{\sqrt{t_{wh}}}\right)+\\[8pt]+e^{-\frac{\sqrt{2}+2}{\sqrt{t_{wh}}}}\cdot\sinh\left(\frac{\sqrt{2}-2}{\sqrt{t_{wh}}}\right)+e^{-\frac{1+\sqrt{3}+\sqrt{2}}{\sqrt{t_{wh}}}}\cdot\sinh\left(\frac{\sqrt{2}-1-\sqrt{3}}{\sqrt{t_{wh}}}\right)\end{array}\right]\cdot\left[\delta(n-t_h-1)+\delta(n-t_h+1)\right]+\\[10pt]+\left[\begin{array}{l}e^{-\frac{\sqrt{2}+2}{\sqrt{t_{wh}}}}\cdot\sinh\left(\frac{\sqrt{2}-2}{\sqrt{t_{wh}}}\right)+e^{-\frac{\sqrt{2}+2+2\cdot\sqrt{3}}{\sqrt{t_{wh}}}}\cdot\sinh\left(\frac{\sqrt{2}+2-2\cdot\sqrt{3}}{\sqrt{t_{wh}}}\right)+\\[8pt]+e^{-\frac{1+\sqrt{3}+2\cdot\sqrt{2}}{\sqrt{t_{wh}}}}\cdot\sinh\left(\frac{1+\sqrt{3}-2\cdot\sqrt{2}}{\sqrt{t_{wh}}}\right)+e^{-\frac{\sqrt{3}+3}{\sqrt{t_{wh}}}}\cdot\sinh\left(\frac{\sqrt{3}-1}{\sqrt{t_{wh}}}\right)\end{array}\right]\cdot\left[\delta(n-t_h-2)+\delta(n-t_h+2)\right]+\\[10pt]+\left[\begin{array}{l}e^{-\frac{1+\sqrt{3}+2\cdot\sqrt{2}}{\sqrt{t_{wh}}}}\cdot\sinh\left(\frac{1+\sqrt{3}-2\cdot\sqrt{2}}{\sqrt{t_{wh}}}\right)+e^{-\frac{\sqrt{3}+\sqrt{5}+4}{\sqrt{t_{wh}}}}\cdot\sinh\left(\frac{\sqrt{3}+\sqrt{5}-4}{\sqrt{t_{wh}}}\right)+\\[8pt]+e^{-\frac{\sqrt{2}+2+2\cdot\sqrt{3}}{\sqrt{t_{wh}}}}\cdot\sinh\left(\frac{\sqrt{2}+2-2\cdot\sqrt{3}}{\sqrt{t_{wh}}}\right)+e^{-\frac{\sqrt{2}+3+\sqrt{5}}{\sqrt{t_{wh}}}}\cdot\sinh\left(\frac{\sqrt{2}+1-\sqrt{5}}{\sqrt{t_{wh}}}\right)\end{array}\right]\cdot\left[\delta(n-t_h-3)+\delta(n-t_h+3)\right]+\\[10pt]+\left[\begin{array}{l}e^{-\frac{\sqrt{2}+2+2\cdot\sqrt{3}}{\sqrt{t_{wh}}}}\cdot\sinh\left(\frac{\sqrt{2}+2-2\cdot\sqrt{3}}{\sqrt{t_{wh}}}\right)+e^{-\frac{2+\sqrt{6}+2\cdot\sqrt{5}}{\sqrt{t_{wh}}}}\cdot\sinh\left(\frac{2+\sqrt{6}-2\cdot\sqrt{5}}{\sqrt{t_{wh}}}\right)+\\[8pt]+e^{-\frac{\sqrt{3}+\sqrt{5}+4}{\sqrt{t_{wh}}}}\cdot\sinh\left(\frac{\sqrt{3}+\sqrt{5}-4}{\sqrt{t_{wh}}}\right)+e^{-\frac{\sqrt{3}+\sqrt{5}+\sqrt{2}+\sqrt{6}}{\sqrt{t_{wh}}}}\cdot\sinh\left(\frac{\sqrt{3}+\sqrt{5}-\sqrt{2}-\sqrt{6}}{\sqrt{t_{wh}}}\right)\end{array}\right]\cdot\left[\delta(n-t_h-4)+\delta(n-t_h+4)\right]\end{array}\right\}$$

The second signal $s_2\Psi(n)$ comprises:

- a first component $s_2\Psi(n)_1$, representative of the energy content $\Theta_s$' of said noise-corrupted modulated digital signal, and
- a second component $s_2\Psi(n)_2$ able to identify at least one pulse in a time instant $T=t_h\pm i$ in which there is at least one sample "n" of said spike noise-corrupted derivative signal s'(n).

In other words, among the plurality "N" of samples composing the modulated digital signal s(n), it is possible to identify "n" samples corrupted by spike noise, such "n" samples being identifiable by means of the pulses represented by delta functions localised in the time instants $T=t_h\pm i$.

In particular, in the expression of the second component $s_2\Psi(n)_2$ nine pulses are identifiable which occur at the instants $T=t_h\pm 4i$ (con i=1...4), such impulses being able to identify the exact time position of the noise-corrupted samples "n" in said digital signal s(n).

Also in this case, the fourth component $s_2\Psi(n)_2$ can provide other information beyond that of identifying the time instant $T=t_h\pm 4$ in which there is spike noise in said signal s'(n).

For example, it is possible to identify the maximum number k of samples to substitute the samples "n" in order to attenuate said spike noise in said modulated digital signal s(n), as described in more detail below.

Analogous conclusions can be obtained by applying the non-linear Teager-Kaiser function $\Psi_F$ to said derivative signal s'(n) representative of the derivative of said noise-corrupted digital signal s(n) by using said second noise model $c_2(n)$.

The following is hence obtained:

$$\Psi_F\left[x(n+1)-x(n-1)+c_2(n+1)-c_2(n-1)\right]=$$
$$=\Psi_F\left[x(n+1)-x(n-1)\right]+\Psi_F\left[c_2(n+1)-c_2(n-1)\right]+2\cdot\Psi_F\left[x(n+1)-x(n-1),c_2(n+1)-c_2(n-1)\right]\approx$$
$$\approx\Psi_F\left[x(n+1)-x(n-1)\right]+\Psi_F\left[c_2(n+1)-c_2(n-1)\right]\approx$$
$$\approx s_4\Psi(n)=s_4\Psi(n)_1+s_4\Psi(n)_2=$$
$$\approx 4\cdot A^2\cdot\left(1+m\cdot\sin(\Omega_a\cdot n)\right)^2\cdot\sin^4(\Omega_c+\Omega_m\cdot q(n))+$$
$$+2\cdot\sum_{h=1}^{H}C_h^2\cdot\left(e^{-\frac{2}{t_{wh}}}-e^{-\frac{6}{t_{wh}}}\right)\cdot\sinh\left(\frac{2}{t_{wh}}\right)\cdot\left[\delta(n-t_h-1)+\delta(n-t_h)+\delta(n-t_h+1)\right]$$

In this case one obtains that the signal $s_4\Psi(n)$ comprises:

- a first component $s_4\Psi(n)_1$, representative of the energy content $\Theta_S'$ of said noise-corrupted modulated digital signal, identical to that previously obtained with the noise model $c_1(n)$;
- a second component $s_4\Psi(n)_2$, being able to identify at least one position "n" in which there is spike noise in said noise-corrupted digital signal $s(n)$ at the time instant $T=t_h$.

In particular, in the expression of the fourth component $s_4\Psi(n)_2$ three components are identifiable which occur at the instants $T=t_h$ and $T=t_h\pm 1$.

The fourth component $s_4\Psi(n)_2$ also in this case provides other information in addition to that of identifying the time positions in which there is spike noise.

For example, it is capable of identifying the energy content of said spike noise in said instant $n=t_h$. In this manner it is possible, for example, to set a second threshold value $\Theta_2$ which acts as indicator for the suppression of the noise-corrupted sample.

It should be underlined that the implementation of scenario 1 can occur both in software and hardware manner.

**Scenario 2**

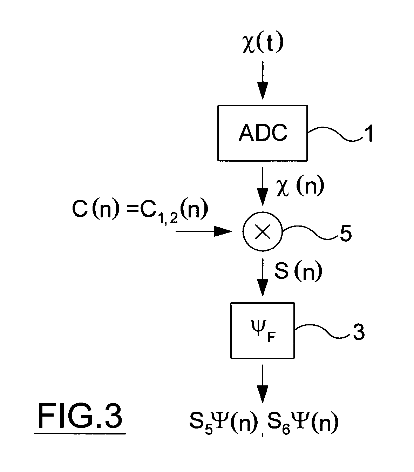

With reference now to figure 3, in which identical numbers are assigned to elements already described with reference to figures 1 and 2, it is also possible to identify the position of the corrupted samples in the noise-corrupted modulated digital $s(n)$, interpreting such digital signal as a modulated digital signal composed of the product of a modulated digital signal $x(n)$ free of noise and a representative signal of the spike noise by means of a multiplier node 5, for generating a third signal $s_5\Psi(n)$, $s_6\Psi(n)$.

Considering, for example, the first noise model $c_1(n)$ and applying step 3 to said noise-corrupted modulated digital signal $s(n)$, if said signal is the product of a signal lacking noise $x(n)$ and the noise model $c_1(n)$, it is obtained that:

$$\Psi_F\left[s(n)\right]=\Psi_F\left[c_1(n)\cdot x(n)\right]=c_1^2(n)\cdot\Psi_F\left[x(n)\right]+x^2(n)\cdot\Psi_F\left[c_1(n)\right]-\Psi_F\left[c_1(n)\right]\cdot\Psi_F\left[x(n)\right]\approx$$
$$\approx\left[\sum_{h=1}^{H}C_h\cdot e^{-\sqrt{\frac{4\cdot|n-t_h|}{t_{wh}}}}\right]^2\cdot A^2\cdot\left(1+m\cdot\sin(\Omega_a\cdot n)\right)^2\cdot\sin^2(\Omega_c+\Omega_m\cdot q(n))$$

Analogously, if the second model $c_2(n)$ is used for the noise representation, it is obtained that:

$$\Psi_F\left[s(n)\right]=\Psi_F\left[c_2(n)\cdot x(n)\right]=c_2^2(n)\cdot\Psi_F\left[x(n)\right]+x^2(n)\cdot\Psi_F\left[c_2(n)\right]-\Psi_F\left[c_2(n)\right]\cdot\Psi_F\left[x(n)\right]\approx$$
$$\approx\left[\sum_{h=1}^{H}C_h\cdot e^{-\frac{2\cdot|n-t_h|}{t_{wh}}}\right]^2\cdot A^2\cdot\left(1+m\cdot\sin(\Omega_a\cdot n)\right)^2\cdot\sin^2(\Omega_c+\Omega_m\cdot q(n))$$

10

It is inferred from the above reported formulas that:

- in the case of reception of an FM modulated signal, in order to limit the presence of spike noise, it suffices to limit the amplitude of the signal picked up by the antenna; while
- in the case of the AM modulated signal, in order to limit the presence of the spike noise, it is necessary to evaluate the coherence between the various samples in order to remove every type of disturbance.

It should be underlined that the method illustrated in such figure 3 is also implementable in hardware.

**Spike noise suppression in a digital signal s(n)**

The method for the suppression of noise, in particular spike noise, in the modulated digital signal s(n) comprises the steps of:

- identifying at least one time instant $T=t_h\pm i$ in which there is at least one noise-corrupted sample "n" of said series "N" of said noise-corrupted modulated digital signal s(n), said step of identification being capable of generating the first signal $s_1\Psi(n)$, $s_3\Psi(n)$ having the first component $s_1\Psi(n)_1$, $s_3\Psi(n)_1$, representative of the energy content $\Theta_s$ of said noise-corrupted modulated digital signal s(n), and the second component $s_1\Psi(n)_2$, $s_3\Psi(n)_2$ able to identify at least one time instant $T=t_h\pm i$ in which there is spike noise in said noise-corrupted digital signal s(n);
- optionally, identifying at least one time instant $T=t_h\pm i$ in which there is at least one noise-corrupted sample "n" of said series "N" of samples of said noise-corrupted modulated digital derivative signal s'(n), said step of identification being able to generate the second signal $s_2\Psi(n)$, $s_4\Psi(n)$ having a third component $s_2\Psi(n)_1$, $s_4\Psi(n)_1$, representative of the energy content $\Theta_S'$ of the derivative of said noise-corrupted digital signal s'(n), and the fourth component $s_2\Psi(n)_2$, $s_4\Psi(n)_2$ able to identify at least one time instant $T=t_h\pm i$ in which there is noise of spike type in said noise-corrupted digital signal s'(n).

Furthermore the inventive method comprises the following steps:

- generating a first threshold value $\Theta_1$ and, optionally, a second threshold value $\Theta_2$;
- comparing the energy content $\Theta_s$ of said first component $s_1\Psi(n)_1$, $s_3\Psi(n)_1$ or of said third component $s_2\Psi(n)_1$, $s_4\Psi(n)_1$ of said at least one sample "n" corrupted by noise identified in said at least one time instant $T=t_h\pm i$ of said noise-corrupted modulated digital signal s(n) with the value of said threshold $\Theta_1$;
- suppressing in said at least one time position $T=t_h\pm i$ said at least one noise-corrupted sample "n" when the energy content $\Theta_s$ of said first component $s_1\Psi(n)_1$, $s_3\Psi(n)_1$ is greater than said threshold value $\Theta_1$ or optionally, when said threshold $\Theta_1$ is not exceeded, if the energy content $\Theta_s'$ of said third component $s_2\Psi(n)_1$, $s_4\Psi(n)_1$ is greater than said threshold value $\Theta_2$ ;
- storing the energy content $\Theta_s$ of said first component $s_1\Psi(n)_1$, $s_3\psi(n)_1$ and its time position identified by said second component $s_1\Psi(n)_2$, $s_3\Psi(n)_2$ of said series "N" of samples of said noise-corrupted modulated digital signal s(n) for a predetermined period of time S, said storing step preceding said step of identifying a time position $T=t_h\pm i$ in which there is at least one sample "n" corrupted by spike noise;
- substituting, in said at least one time position $T=t_h\pm i$ of said at least one noise-corrupted sample "n", the corrupted sample "n" with another sample "k" of said series "N" of samples which are not corrupted by spike noise when said energy content $\Theta_s$ of said first component $s_1\Psi(n)_1$, $s_3\Psi(n)_1$ is greater than said threshold value $\Theta_1$ or optionally, when said threshold $\Theta_1$ is not exceeded, if the energy content $\Theta_s'$ of said third component $s_2\Psi(n)_1$, $s_4\Psi(n)_1$ is greater than said threshold value $\Theta_2$.

It should be pointed out that said suppression step consists of replacing said at least one sample "n" corrupted by spike noise with a sample "k", or with a plurality of samples "k" of said series "N" of samples not corrupted by noise, the latter having a time position closest to said at least one sample "n" corrupted by spike noise.

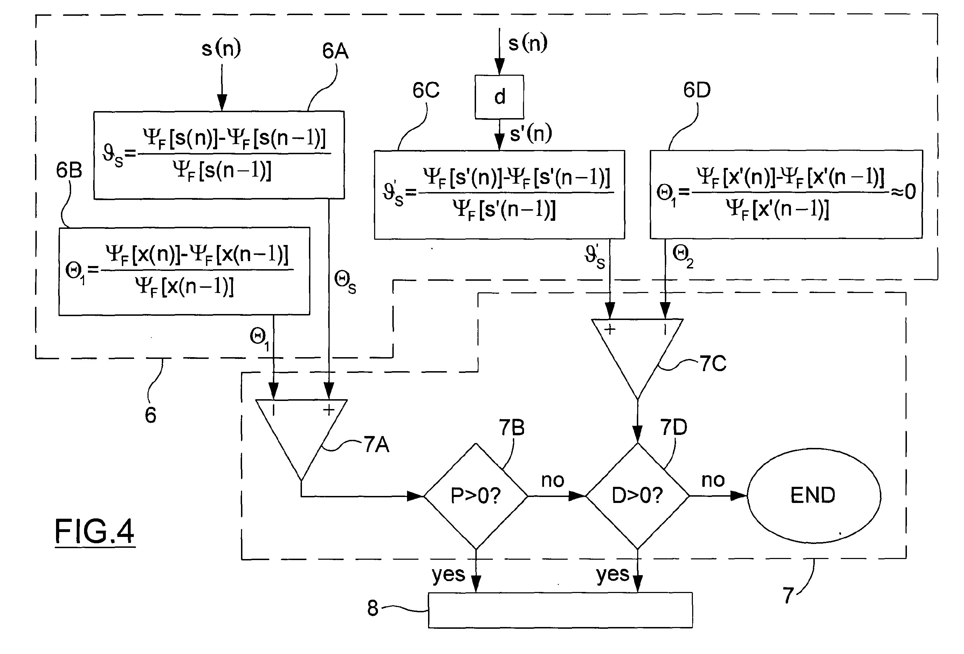

In figure 4, the explanatory diagram of the method is illustrated for the suppression of the above described shot noise. It is noted that, once the time instant $T=t_h\pm i$ has been identified in which there is spike noise in this noise-corrupted digital signal s(n), there is a first processing step 6 during which the first threshold value $\Theta_1$ is generated as well as the approximate value $\Theta_s$ of the energy content of said first component $s_1\Psi(n)_1$, $s_3\Psi(n)_1$.

It should be pointed out that the identification of the time instant $T=t_h\pm i$ in which there is spike noise in such noise-corrupted digital signal s(n) is conducted in accordance with the above described identification method.

Optionally, such first processing step 6 also foresees generating a second threshold value $\Theta_2$ and the approximate value $\Theta_s'$ of the energy content of said third component $s_2\Psi(n)_1$, $s_4\Psi(n)_1$.

Moreover, the explanatory diagram of the method for the suppression of the spike noise foresees that there is a processing step 7 during which an evaluation "P" is carried out of the instantaneous variation of the power of such noise-corrupted digital signal s(n) and optionally an evaluation step of the instantaneous variation of the power of the noise-corrupted digital derivative signal "D" s(n) of such signal.

In particular, in order to complete the identification step 6 it is necessary, for example, to foresee the following elements:

- a block 6A capable of generating the approximate value $\Theta_s$ of the energy content of said first component $s_1\Psi(n)_1$, $s_3\Psi(n)_1$;
- a block 6B capable of generating the threshold value $\Theta_1$;
- optionally, after having generated the derivative signal s'(n) of the noise-corrupted digital signal s(n), a block 6C capable of generating the approximate value $\Theta_s'$ of the energy content of said third component $s_2\Psi(n)_1$, $s_4\Psi(n)_1$ and a block 6D capable of generating the threshold value $\Theta_2$.

In order to complete the processing step 7, it is for example necessary to foresee the following elements:

- a comparator 7A capable of comparing the energy content $\Theta_s$ of said at least one noise-corrupted sample "n" identified in said at least one time instant $T=t_h\pm i$ of said noise-corrupted modulated digital signal s(n) with the first value of said threshold $\Theta_1$;
- a decision block 7B capable of evaluating if said energy content $\Theta_s$ of said first component $s_1\Psi(n)_1$, $s_3\Psi(n)_1$ is greater than said first threshold value $\Theta_1$;
- optionally, a comparator 7C capable of comparing the energy content $\Theta_s'$ of said at least one noise-corrupted sample "n" in said at least one time instant $T=t_h\pm i$ of said noise-corrupted modulated digital signal s(n) with the second value of said $\Theta_2$;
- a decision block 7D capable of evaluating if said energy content $\Theta_s'$ of said third component $s_2\Psi(n)_1$, $s_4\Psi(n)_1$ is greater than said second threshold value $\Theta_2$.

From the diagram of figure 4, it may moreover be inferred that there is a further processing step 8 in which the noise-corrupted samples "n" are substituted with non-corrupted samples.

In particular, the processing step foresees that, if the spike-noise corrupted sample "n" has an energy content $\Theta_S$ greater than the threshold value $\Theta_1$, then, with YES branch decision block 7B, such sample "n" can generate a noise such to degrade the listening quality, once the signal s(n) is played by the speakers.

This specific sample "n", in which the energy content $\Theta_S$ is greater than the threshold value $\Theta_1$, must be appropriately processed by means of the processing block 8 for suppressing the shot noise present in the time instant associated with such specific sample "n", as described in more detail below.

If, on the other hand, the energy content of such spike noise-corrupted sample "n" is less than the threshold value $\Theta_1$, the NO branch of the decision 7B verifies if the energy content $\Theta_s'$ of said third component $s_2\Psi(n)_1$, $s_4\Psi(n)_1$ is less than the second threshold value $\Theta_2$. Following such comparison, if the energy content $\Theta_s'$ is then less than $\Theta_2$, then, with NO branch block 7D, the energy content of such spike noise - corrupted sample "n" is not capable of generating a noise which can degrade the listening quality, once the signal s(n) is played by the loudspeakers.

On the other hand, if the energy content $\Theta_s'$ is greater than $\Theta_2$, then, with YES branch of the block 7D, the sample "n" is corrupted by spike noise which can generate a noise such to be able to degrade the listening quality, once the signal s(n) is played by the loudspeakers.

Also in this difficulty, such specific sample "n", whose energy content $\Theta_s'$ is greater than the threshold value $\Theta_2$, must be appropriately processed by means of the processing block 8 for suppressing the shot noise present in the time instant associated with such specific sample "n", as described more in detail below.

It should be underlined that the information on the energy content $\Theta_S$ of the spike noise-corrupted sample "n" is identified by the first component $s_1\Psi(n)_1$, $s_3\Psi(n)_1$ while the information on the energy content $\Theta_S'$ is identified by the third component $s_2\Psi(n)_1$, $s_4\Psi(n)_1$.

In order to evaluate the value of the energy content $\Theta_s$ it is necessary to evaluate the instantaneous variation of the power P of the noise-corrupted digital signal s(n). Advantageously, the block 6A is capable of evaluating the instantaneous variation of the power P of the digital signal s(n) by applying the following relation:

$$\Theta_s = \{\Psi_F[s(n)] - \Psi_F[s(n-1)]\}/ \Psi_F[s(n-1)]$$

This relation indicate -if compared with the reference threshold $\Theta_1$ - how much noise energy is degrading the original signal.

This quantity $\Theta_s$ can therefore be calculated by executing the ratio between a numerator and a denominator in which:

- the numerator identifies the derivative of said non-linear Teager-Kaiser function of said noise-corrupted modulated digital signal s(n) and
- the denominator identifies the non-linear Teager-Kaiser function of the noise-corrupted signal s(n) at the preceding instant $T=t_h-1$.

In order to evaluate the value $\Theta_1$, it is necessary to evaluate the instantaneous variation of the power P of the digital signal x(n) which is not corrupted by noise. Advantageously, the block 6B is capable of evaluating the instantaneous variation of the power P of the digital signal x(n) by applying the following relation:

$$\Theta_1 = \{\Psi_F[x(n)] - \Psi_F[x(n-1)]\}/ \Psi_F[x(n-1)]$$

This quantity $\Theta_1$ can therefore be calculated by executing the ratio between a numerator and a denominator in which:

- the numerator identifies the derivative of said non-linear Teager-Kaiser function of said modulated digital signal x(n) which is not corrupted by noise, and
- the denominator identifies the non-linear Teager-Kaiser function of the signal x(n) not corrupted by noise at the preceding instant $T=t_h-1$.

In order to evaluate the value $\Theta_s'$, it is necessary to evaluate the instantaneous variation of the power D of the derivative signal s'(n) corrupted by noise. Advantageously, the block 6C is capable of evaluating the instantaneous variation of the power D of the derivative signal s'(n) by applying the following relation:

$$\Theta_s' = \{\Psi_F[s'(n)] - \Psi_F[s'(n-1)]\}/ \Psi_F[s'(n-1)]$$

This relation indicates, if compared with the reference threshold value $\Theta_2$, how much noise energy is polluting the derivative of the original signal.

Such quantity $\Theta_s'$ can therefore be calculated by executing the ratio between a numerator and a denominator in which:

- the numerator identifies the derivative of said non-linear Teager-Kaiser function of the derivative signal s'(n) and
- the denominator identifies the non-linear Teager-Kaiser function of the derivative signal s'(n) corrupted by noise at the preceding instant $T=t_h-1$.

In order to evaluate the value $\Theta_2$, it is necessary to evaluate the instantaneous variation of the power D of the derivative signal x'(n) which is not corrupted by noise. Advantageously, the block 6D is capable of evaluating the instantaneous variation of the power D of the derivative signal x'(n) not corrupted by noise by applying the following relation:

$$\Theta_2 \geq \frac{\Psi_F\left[x'(n)\right] - \Psi_F\left[x'(n-1)\right]}{\Psi_F\left[x'(n-1)\right]}$$

which assumes a nearly zero value since the energy of the derivative of a limited band signal cannot change instantaneously.

In practice, said threshold $\Theta_2$ can be fixed -instead of at zero- at a value for example equal to $\Theta_1$.

It should be pointed out that in the particular case of an FM modulated signal for distinguishing between the various samples "n" corrupted by spike noise, the threshold value $\Theta_1$ can be fixed at a value which is greater or equal to that determined with the following relation:

$$\theta_{FM} \geq \frac{\Psi_F\big[x(n)\big] - \Psi_F\big[x(n-1)\big]}{\Psi_F\big[x(n-1)\big]} \leq \frac{4 \cdot \Omega_m^2 \cdot \Omega_q}{1 - \Omega_m^2}$$

where $\Omega_m$ is the angular frequency deviation and $\Omega_q/2\pi$ is the band of the FM modulating signal.

In the particular case of an AM modulated signal for distinguishing between the spike noise - corrupted samples "n", the threshold value $\Theta_1$ must be greater than the value which is calculated by means of the following relation:

$$\theta_{AM} > 4 \cdot m \cdot \sin\frac{\Omega_a}{2} \approx 2 \cdot m \cdot \Omega_a$$

where $\Omega_a$ is the AM angular modulation frequency, $\Omega_c$ is the angular frequency of the carrier signal and m is the AM modulation index.

Once those samples have been identified among the spike noise - corrupted samples "n" which have an energy content greater than the threshold value $\Theta_1$, it is then possible to suppress each spike noise - corrupted sample "n" in the time instant $T = t_h \pm i$.

In particular, the suppression foresees substituting the spike noise - corrupted sample "n" having an energy content greater than the threshold value $\Theta_1$ with another sample k of said series "N" of samples which are not corrupted by noise.

In other words, if the energy content of the noise-corrupted sample identified in the time instant $T = t_h \pm i$ is greater than the threshold value $\Theta_1$, it is necessary to substitute said spike noise-corrupted sample "n" with another sample k of said series of samples composing the modulated digital signal s(n) which is not corrupted by noise.

It should be pointed out that by executing a storing step for predetermined time period S, during which the energy content of the series "N" of the samples of said noise-corrupted modulated digital signal s(n) is stored along with their occurrence time instant $T = t_h \pm i$, it is possible to replace the spike noise-corrupted sample "n" identified in the time instant $T = t_h \pm i$ with another sample k of said series "N" of samples which are not corrupted by noise, such as for example a sample having a time instant closest to that of the spike noise-corrupted sample "n".

It is also possible to substitute said spike noise-corrupted sample "n" with a plurality "K" of samples chosen from among said series "N" of samples which have an occurrence time instant $T = t_h \pm i$ closest to the time instant of the spike noise - corrupted sample "n".

To such end, in order to determine how many samples "k" must substitute said at least one spike noise - corrupted sample "n" to suppress the spike noise from the signal s(n), it is necessary to calculate the error introduced by the correction and compare such error with the energy of the noise added by the spike.

In particular, for the case of an FM modulated signal, it is obtained that the number of samples "k" to substitute the corrupted sample "n" is obtained from the following relation:

$$k_{FM} \leq \frac{1}{4} \cdot \left( \sqrt{1 + 4 \cdot \xi^2 \cdot \frac{\dfrac{C_{h_{max}}^2}{A^2}\left(1 - e^{-\frac{4}{t_{wh}}}\right)}{\Omega_m^2 \cdot \Omega_q}} - 1 \right)$$

where $\xi$ is the desired value of the ratio between the noise introduced by the correction and power added by the spike, $\Omega_m$ is the angular frequency deviation and $\Omega_q/2\pi$ is the band of the FM modulating signal, $t_{wh}$ the time constant of the spike and $C_{hmax}$ the maximum amplitude of the spike.

It is possible to replace the spike noise-corrupted sample "n" identified in the time instant $T = t_h \pm i$ with a single sample uncorrupted by noise (or rather k= 1), this single sample uncorrupted by noise being the first sample uncorrupted by noise closest to the time instant $T = t_h \pm i$ of the sample "n" corrupted by spike noise.

Alternatively, it is possible to replace said at least one sample corrupted by noise in the position $n = t_h$ with a plurality of samples "K" of said series of samples uncorrupted by noise, said plurality of samples "k" having a time position which is closest to said at least one noise-corrupted sample $n = t_h$.

13

It was estimated that in order to reduce the size of the spike noise by about 40 dB in the case in which the channel separation is equal to 150KHz, twelve samples are necessary for $T=t_h$ if the Teager-Kaiser function is executed on the noise-corrupted digital signal and about twelve samples for $T=t_h\pm1$ if the energy level of the corrupted sample has the same intensity as the samples of the signal s(n) which are not corrupted by noise.

In particular, for the case of an AM signal, it is possible to reach analogous considerations. It should be specified that the number of samples "k" to substitute the corrupted sample "n" is obtained by the following relation:

$$k_{AM} \le \frac{1}{4} \cdot \left( \sqrt{1 + 2 \cdot \xi^2 \cdot \frac{\frac{C_{h_{\max}}^2}{A^2}\left(1 - e^{-\frac{4}{t_{wh}}}\right)}{m \cdot \sin^2 \Omega_c \cdot \Omega_a}} - 1 \right)$$

where $\xi$ is the desired value of the ratio between the noise introduced by the correction and the power added by the spike, $\Omega_a/2\pi$ is the band of the AM modulating signal, $\Omega_c$ is the angular frequency of the carrier signal, m the AM modulation index, $t_{wh}$ the time constant of the spike, and $C_{hmax}$ the maximum amplitude of the spike.

The previously obtained result $k_{AM}$ for an AM modulated signal suggests substituting only the corrupted samples "n" localized at $T=t_h$, in the case the non-linear Teager-Kaiser function is executed of said noise-corrupted modulated digital signal s(n), i.e.:

$$\Psi_F\left[ s(n) = x(n) + c_{1,2}(n) \right]$$

The result $k_{AM}$ previously obtained for an AM modulated signal suggests substituting the corrupted samples "n" localised at $T=t_h\pm1$ and at $T=t_h$, in the case the non-linear Teager-Kaiser function is executed of said derivative signal s'(n), i.e.:

$$\Psi_F\left[ s'(n) = x(n+1) - x(n-1) + c_{1,2}(n+1) - c_{1,2}(n-1) \right]$$

It was calculated that with the previously obtained $k_{AM}$ formula, it is not possible to suppress the spike noise in the digital signal s(n) beyond 30dB.

It should be pointed out that, in order to increase the suppression (beyond 30dB) of the noise-corrupted samples "n" in the case of an AM modulated digital signal, it is possible to suppress the noise-corrupted sample with the preceding sample added to the difference between sample itself and its preceding sample.

The number of sample "k" to substitute those corrupted is obtained by resolving the following inequality:

$$\left| \int_{t_h-k}^{t_h+k} \left\{ 2 \cdot \left(1 + m \cdot \sin\left(\Omega_a \cdot (n-2\cdot k-1)\right)\right)^2 - \left(1 + m \cdot \sin\left(\Omega_a \cdot (n-2\cdot k-2)\right)\right)^2 - \left(1 + m \cdot \sin\left(\Omega_a \cdot n\right)\right)^2 \right\} \cdot dn \right| <$$

$$< \frac{\xi^2}{A^2 \cdot \sin^2 \Omega_c} \cdot \left| \int_{t_h-k}^{t_h+k} 2 \cdot C_h^2 \cdot e^{-\frac{2}{t_{wh}}} \cdot \sinh\left(\frac{2}{t_{wh}}\right) \cdot \delta(n-t_h) \cdot dn \right|$$

In other words, the spike noise in the modulated digital signal s(n) can be suppressed by substituting the spike noise-corrupted samples "n", identified by executing the non-linear Teager-Kaiser function of said modulated digital signal s(n) and having an energy content $\Theta_s$ greater than said threshold value $\Theta_1$ or optionally, when said threshold $\Theta_1$ is not exceeded, the energy content $\Theta_s'$ greater than said threshold value $\Theta_2$.

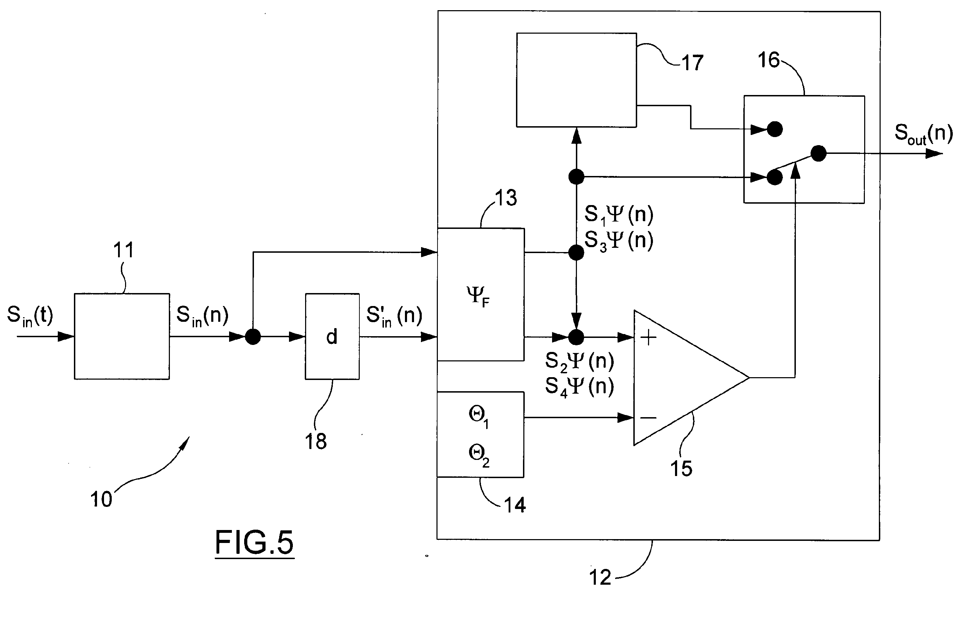

With reference to figure 5, a receiver is indicated in its entirety with 10 for receiving an RF analog signal $s_{in}(t)$,

which comprises analog-digital converter means 11 able to receive said analog signal $s_{in}(t)$ in input for converting it into a digital signal $s_{in}(n)$, said digital signal $s_{in}(n)$ being a noise-corrupted modulated digital signal.

It should be indicated that in such figure 5, only the elements necessary for understanding the functioning and making of the present invention have been illustrated. The man skilled in the art will be capable of understanding which other elements are necessary, how to design, implement and connect them with the illustrated elements in order to make a complete diagram of the receiver.

The receiver 10 comprises:

- processing means 12 able to receive said signal $s_{in}(n)$ in input, so to generate a digital signal $s_{out}(n)$ free of spike noise.

In particular, said processing means 12 in turn comprise:

- means 13 able to implement the non-linear Teager-Kaiser function to said digital signal $s_{in}(n)$ so to generate the first signal $s_1\Psi(n)$, $s_3\Psi(n)$ having a first component $s_1\Psi(n)_1$, $s_3\Psi(n)_1$ for identifying the energy content $\Theta_S$ of the series of samples of said digital signal $s_{in}(n)$ and a second component $s_1\Psi(n)_2$, $s_3\Psi(n)_2$ for identifying at least one time instant $T=t_h\pm i$ in which at least one sample "n" of said series "N" of samples is corrupted by said noise;
- threshold generator means 14 able to set said threshold $\Theta_1$ and/or $\Theta_2$,
- comparator means 15 able to compare the energy value $\Theta_s$ (and/or $\Theta_s$') of said at least one spike noise - corrupted sample "n" with the value of said threshold $\Theta_1$ and/or $\Theta_2$; and
- suppression means 16 for suppressing, in said at least one time instant $T=t_h\pm i$, said at least one spike noise - corrupted sample "n" with another sample "k" of said series "N" of samples uncorrupted by noise in order to reconstruct the originally transmitted signal $s_{in}(n)$ free of spike noise.

The processing means 12 moreover comprise storing means 17 for storing, in a predetermined time period S, the energy content $\Theta_s$ (and/or $\Theta_s$') of said series of samples "N" as well as their event time instant $T=t_h\pm i$.

The receiver 10, optionally, if it is desired to control the receiver itself also by observing the energy connected to the variation of the derivative of the source signal $s(n)$, comprises derivation means 18 for generating a derivative signal $s'(n)$ representative of the derivative of said noise-corrupted modulated digital signal $s(n)$.

Otherwise, the analog-digital converter means 11 can also be implemented in the processing means 12 rather than in the receiver 10.

The derivative signal $s'(n)$ is placed in input to the means 13 for generating a second signal $s_2\Psi(n)$, $s_4\Psi(n)$ having a first component $s_2\Psi(n)_1$, $s_4\Psi(n)_1$ for identifying the energy content $\Theta_s$' of the series of samples of said digital signal $s_{in}(n)$ and a second component $s_2\Psi(n)_2$, $s_4\Psi(n)_2$ for identifying at least one time instant $T=t_h\pm i$ in which at least one sample "n" is corrupted by spike noise of said series "N" of samples.

It should be indicated that the suppression means 16 are able to substitute, in said at least one time instant $T=t_h\pm i$, said at least one sample "n" corrupted by spike noise with another sample "k" of said series "N" of samples not corrupted by noise when the energy content of said at least one sample "n" corrupted by spike noise is greater than said threshold value $\Theta_s$ (and/or $\Theta_s$').

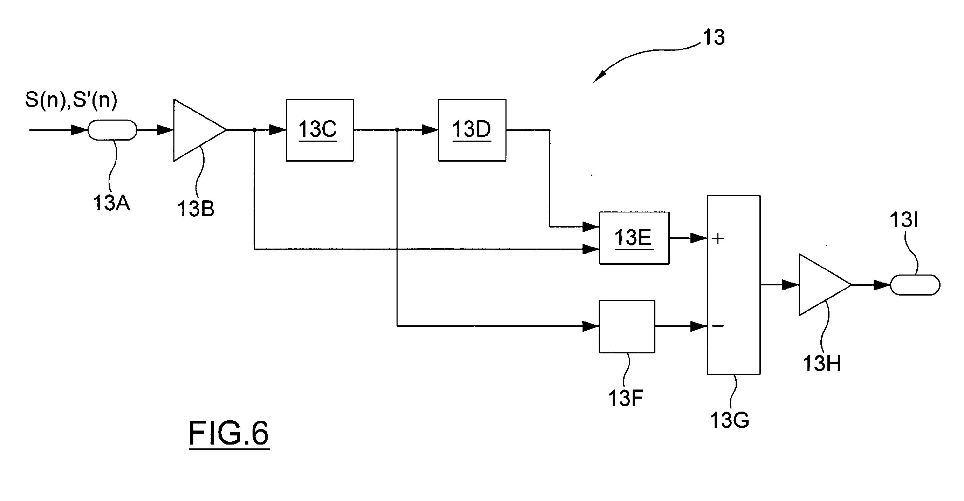

The means 13 for implementing the non-linear Teager-Kaiser function is specified in a circuit illustrated in figure 6, which comprises an input 13A able to receive the signal $s(n)$ or the derivative signal $s'(n)$, preferably but not necessarily a pre-amplification stage 13B for amplifying the signal $s(n)$, a first delay block 13C and a second delay block 13D.

The first delay block 13C is connected to the input 13A and is able to delay the input signal $s(n)$ by one sample, while the second delay block 13D is input connected to the output of the first delay block 13C and is able to delay the signal output from the first delay device block 13C by one sample.

The means 13 comprise a multiplier 13E connected to the input 13A and to the output of the second delay device block 13D to multiply the signal $s(n)$ at the input 13A and the signal output from the second delay block 13D and a block 13F which squares the signal output from the first delay block 13C.

Moreover, an adder block 13G is present having a positive input connected to the output of the block 13F and a negative input connected to the output of the multiplier block 13E.

Preferably but not necessarily, the means 13 comprise a post-amplification stage 13H for amplifying the signal output from the adder block 13G and an output 13I from which the output signal $s_1\Psi(n)$, $s_2\Psi(n)$, $s_3\Psi(n)$, e/o $s_4\Psi(n)$ is drawn.

In the case in which the sample $s(n-1)$ of the signal $s(n)$ is present at the input 13A, the signal at the output 13I is represented by the below-reported expression:

$$\left[s(n)\right]^2 - s(n+1)\cdot s(n-1)$$

or rather the Teager Kaiser $\Psi[s(n)]$ of the modulated digital signal $s(n)$.

In a preferred embodiment, the processing means 12, the means 13, the threshold generator means 14, the comparator means 15 and the suppression means 16 can be implemented in a single device, such as for example a DSP (Digital Signal Processor). In this case, the processing means 12, the means 13, the threshold generator means 14, the comparator means 15 and the suppression means 16 are advantageously made through a sequence of logic instructions implemented due to the logic present in the DSP.

The receiver 10 can be inserted in a portable multimedia device (not illustrated in the figures) and comprises a central unit and a plurality of circuits, said central unit being able to control the operation of said plurality of circuits, and said plurality of circuits comprising at least one interface chosen from the group comprising a video interface, a keyboard interface, a communication interface, a pen input interface, an audio interface or a combination of these.

The portable multimedia device also comprises at least one antenna (non illustrated in the figures) able to receive the modulated analog signal $s(t)$, and the receiver 10, according to the above-described invention, has two signal inputs (not illustrated in the figures) coupled to the respective antenna for receiving the modulated analog signal $s(t)$.

For example, the portable multimedia device described above can be a cellular telephone equipped with a digital media player, of MP3 player type and/or MP4 player type and/or WMV player Digital type.

Of course, a man skilled in the art, in order to satisfy contingent and specific needs, can make numerous modifications and variations to the method, apparatus and receiver according to the invention described above, all moreover contained in the protective scope of the invention as defined by the following claims.

**Claims**

1. Method for identifying noise in a noise-corrupted modulated digital signal ($s(n)$), in particular spike noise, said method comprising the step of:

   - applying a non-linear Teager-Kaiser function ($\Psi$) to said noise-corrupted modulated digital signal ($s(n)$) to generate a first signal ($s_1\Psi(n)$, $s_3\Psi(n)$) having a first component ($s_1\Psi(n)_1$, $s_3\Psi(n)_1$), representative of the energy content ($\Theta_S$) of said noise-corrupted modulated digital signal ($s(n)$), and a second component ($s_1\Psi(n)_2$, $s_3\Psi(n)_2$) able to identify at least one time instant ($T=t_h\pm i$) in which there is spike noise in said noise-corrupted digital signal ($s(n)$).

2. Method in accordance with claim 1, comprising the additional steps of:

   - processing said noise-corrupted modulated digital signal ($s(n)$) for generating a derivative signal ($s'(n)$) representative of the derivative of said noise-corrupted digital signal ($s(n)$);
   - applying said non-linear Teager-Kaiser function ($\Psi$) to said derivative signal ($s'(n)$) for generating a second signal ($s_2\Psi(n)$, $s_4\Psi(n)$) having a third component ($s_2\Psi(n)_1$, $s_4\Psi(n)_1$), representative of the energy content ($\Theta_s$) of the derivative of said noise-corrupted digital signal ($s'(n)$), and a fourth component ($s_2\Psi(n)_2$, $s_4T(n)_2$) able to identify at least one time instant ($T=t_h\pm i$) in which there is spike noise in said noise-corrupted digital signal ($s(n)$).

3. Method in accordance with any one of the claims from 1 to 2, wherein said noise-corrupted modulated digital signal ($s(n)$) is composed of a series (N) of samples able to identify a carrier signal oscillating at a carrier frequency ($f_c$) and a modulating signal, in which said first ($s_1\Psi(n)_1$, $s_3\Psi(n)_1$) and third ($s_2\Psi(n)_1$, $s_4\Psi(n)_1$) component are able to identify the energy content ($\Theta_s$, $\Theta_s'$) of said series (N) of samples of said noise-corrupted modulated digital signal ($s(n)$) and the energy content of the derivative of said series of samples (N) of said noise-corrupted derivative digital signal ($s'(n)$), respectively, and said second ($s_1\Psi(n)_2$, $s_3\Psi(n)_2$) and fourth ($s_2\Psi(n)_2$, $s_4\Psi(n)_2$) component are able to identify in said at least one time instant ($T=t_h\pm i$) at least one sample (n) corrupted by spike noise.

4. Method in accordance with any one of the claims from 1 to 3, wherein said at least one spike noise-corrupted sample (n) identified in said at least one time instant ($T=t_h\pm i$) is represented by means of a Dirac delta function ($\delta$).

5. Method for the suppression of noise in a noise-corrupted modulated digital signal ($s(n)$), in particular spike noise, said method **comprising the steps of:**

   - identifying at least one time instant ($T=t_h\pm i$) in which there is at least one noise-corrupted sample (n) of said series (N) of samples of said noise-corrupted modulated digital signal ($s(n)$), said identification step being in accordance with claims 1-4;
   - generating a first threshold value ($\Theta_1$) as a function of the ratio between a numerator which identifies the derivative of said non-linear Teager-Kaiser function of said modulated digital signal (x(n)) uncorrupted by noise and a denominator which identifies the non-linear Teager-Kaiser function of the noise-corrupted signal (x(n)) at the preceding instant $T=t_h-1$, and said first threshold value ($\Theta_1$) being calculable by means of the following equation:

$$\Theta_1 = \{\Psi_F[x(n)] - \Psi_F[x(n-1)]\}/ \Psi_F[x(n-1)]$$

- comparing the energy content ($\Theta_s$) of said first component ($s_1\Psi(n)_1$, $s_3\Psi(n)_1$) of said at least one noise-corrupted sample (n) of said noise-corrupted modulated digital signal (s(n)) with the value of said threshold ($\Theta_1$), said energy content ($\Theta_s$) being calculable by means of the following equation:

$$\Theta_s = \{\Psi_F[s(n)] - \Psi_F[s(n-1)]\}/ \Psi_F[s(n-1)]$$

where:

- the numerator identifies the derivative of said non-linear Teager-Kaiser function of said noise-corrupted modulated digital signal (s(n)) and
- the denominator identifies the non-linear Teager-Kaiser function of the noise-corrupted signal (s(n)) at the preceding instant ($T=t_h-1$);
- suppressing in said at least one time position ($T=t_h\pm i$) said at least one noise-corrupted sample (n) if the energy content ($\Theta_s$) of said first component ($s_1\Psi(n)_1$, $s_3\Psi(n)_1$) is greater than said threshold value ($\Theta_1$).

6. Method in accordance with claim 5, comprising the additional steps of:

- generating a second threshold value ($\Theta_2$) when said energy content ($\Theta_s$) of said first component ($s_1\Psi(n)_1$, $s_3\Psi(n)_1$) is less than said first threshold ($\Theta_1$), said second threshold value ($\Theta_2$) being a function of the ratio between a numerator which identifies the derivative of said non-linear Teager-Kaiser function of the derivative signal (x'(n)) of said modulated digital signal (x(n)) uncorrupted by noise and a denominator which identifies the non-linear Teager-Kaiser function of the derivative signal (x'(n)) of said modulated digital signal (x(n)) uncorrupted by noise at the preceding instant ($T=t_h-1$), said threshold ($\Theta_2$) being calculable by means of the following equation:

$$\Theta_2 = \{\Psi_F[x'(n)] - \Psi_F[x'(n-1)]\}/ \Psi_F[x'(n-1)]$$

- comparing the energy content ($\Theta_s'$) of said third component ($s_2\Psi(n)_1$, $s_4\Psi(n)_1$) of said at least one noise-corrupted sample (n) of said noise-corrupted modulated digital signal (s(n)) with the value of said second threshold ($\Theta_2$), said energy content ($\Theta_s'$) being calculable by means of the following equation:

$$\Theta_s = \{\Psi_F[s'(n)] - \Psi_F[s'(n-1)]\}/ \Psi_F[s'(n-1)]$$

where:

- the numerator identifies the derivative of said non-linear Teager-Kaiser function of said derivative of said noise-corrupted modulated digital signal (s(n)) and
- the denominator identifies the non-linear Teager-Kaiser function of the derivative of said noise-corrupted signal (s(n)) at the preceding instant ($T=t_h-1$);
- suppressing in said at least one time position ($T=t_h\pm i$) said at least one noise-corrupted sample (n) when the energy content ($\Theta_s'$) of said third component ($s_2\Psi(n)_1$, $s_4\Psi(n)_1$) is greater than said second threshold value ($\Theta)_2$).

7. Method in accordance with claim 5 or 6, **characterised in that** it comprises the additional steps:

- storing the energy content ($\Theta_s$) of said first component ($s_1\Psi(n)_1$, $s_3\Psi(n)_1$) and the time position of said second component ($s_1\Psi(n)_2$, $s_3\Psi(n)_2$) of said series of samples of said noise-corrupted modulated digital signal (s(n)) for a predetermined time period (S), said storing step preceding said identification step;

- suppressing in said at least one time instant ($T=t_h\pm i$) said at least one spike noise-corrupted sample (n) with another sample (k) of said series (N) of samples.

8. Method in accordance with claim 7, wherein said suppression step consists of replacing said at least one spike noise-corrupted sample (n) with a sample (k) of said series (N) of samples uncorrupted by noise, the latter (k) having a time position closest to said at least one spike noise-corrupted sample (n).

9. Method in accordance with claim 7, wherein said suppression step consists of replacing said at least one spike noise-corrupted sample (n) with a plurality of samples (K) of said series of samples uncorrupted by noise, said plurality of samples (K) having a time position closest to said at least one spike noise-corrupted sample (n).

10. Method in accordance with any one of the claims from 7 to 9, wherein said first threshold value ($\Theta_1$) and said one sample (k) or plurality of samples (K) are calculable, in the case in which said noise-corrupted modulated digital signal (s(n)) is modulated in FM, by means of the following respective formulas:

$$\theta_{FM} = \frac{\Psi_F\left[s(n)\right] - \Psi_F\left[s(n-1)\right]}{\Psi_F\left[s(n-1)\right]} \leq \frac{4 \cdot \Omega_m^2 \cdot \Omega_q}{1 - \Omega_m^2}$$

and

$$k_{FM} < \frac{1}{4} \cdot \left( \sqrt{1 + 4 \cdot \xi^2 \cdot \frac{\theta}{\Omega_m^2 \cdot \Omega_q}} - 1 \right)$$

where $\xi$ is the desired value of the ratio between the noise introduced by the correction and the power added by the spike, $\Omega_m$ is the angular frequency deviation and $\Omega_q$ is the angular frequency of the FM modulating signal.

11. Method in accordance with any one of the claims from 7 to 9, wherein said first threshold value ($\Theta_1$) and said one sample (k) or plurality of samples (K) can be calculable, in the case in which said noise-corrupted modulated digital signal (s(n)) is modulated in AM, by means of the following respective formulas:

$$\theta_{AM} > 4 \cdot m \cdot \sin\frac{\Omega_a}{2} \approx 2 \cdot m \cdot \Omega_a$$

and

$$k_{AM} < \frac{1}{4} \cdot \left( \sqrt{1 + 2 \cdot \xi^2 \cdot \frac{\theta}{m \cdot \sin^2 \Omega_c \cdot \Omega_a}} - 1 \right)$$

where $\xi$ is the desired value of the ratio between the noise introduced by the correction and the power added by the spike, $\Omega_a$ is the AM angular modulation frequency, $\Omega_c$ is the angular frequency of the carrier signal and m the AM modulation index.

12. Apparatus for the suppression of noise in a noise-corrupted modulated digital signal (s(n)), in particular spike noise, said apparatus **characterised in that** it comprises:

- processing means (12) able to receive in input said noise-corrupted modulated digital signal (s(n)) and to apply a non-linear Teager-Kaiser function ($\Psi$) to said digital signal (s(n)) to generate a first signal ($s_1\Psi(n)$, $s_3\Psi(n)$) having a first component ($s_1\Psi(n)_1$, $s_3\Psi(n)_1$), representative of the energy content ($\Theta_s$) of said noise-corrupted modulated digital signal (s(n)), and a second component ($s_1\Psi(n)_2$, $s_3\Psi(n)_2$) able to identify at least one time instant ($T=t_h\pm i$) in which there is spike noise in said noise-corrupted modulated digital signal (s(n));
- threshold generator means (14) being able to generate a first threshold value ($\Theta_1$) function of the ratio between a numerator which identifies the derivative of said non-linear Teager-Kaiser function of said modulated digital signal (x(n)) uncorrupted by noise and a denominator which identifies the non-linear Teager-Kaiser function of the signal (x(n)) uncorrupted by noise at the preceding instant ($T=t_h-1$);
- comparator means (15) being able to compare the energy content ($\Theta_s$) of said first component ($s_1\Psi(n)_1$, $s_3\Psi(n)_1$) of said at least one noise-corrupted sample (n) of said modulated digital signal (s(n)) with the value of said first threshold value ($\Theta_1$); and
- suppression means (16) for suppressing in said at least one time position ($T=t_h\pm i$) in which there is spike noise in said noise-corrupted digital signal (s(n)) with another sample of said series of samples uncorrupted by noise if the energy content ($\Theta_s$) of said first component ($s_1\Psi(n)_1$, $s_3\Psi(n)_1$) is greater than said threshold value ($\Theta_1$).

**13.** Apparatus for the suppression of spike noise in accordance with claim 11 or 12, **characterised in that** it comprises storing means (17) able to store, for a predetermined time period (S), the energy content ($\Theta_s$) of said first component ($s_1\Psi(n)_1$, $s_3\Psi(n)_1$) and said time position of said second component ($s_1\Psi(n)_2$, $s_3\Psi(n)_2$) of said noise-corrupted modulated digital signal (s(n)).

**14.** Apparatus for the suppression of spike noise in accordance with claim 13, **characterised in that** said suppression means (16) suppress in said at least one time position ($T=t_h\pm i$) said at least one noise-corrupted sample (n) with another sample ($k_{max}$) of said series of samples uncorrupted by noise, when the energy content ($\Theta_s$) of said first component ($s_1\Psi(n)_1$, $s_3\Psi(n)_1$) of said at least one noise-corrupted sample (n) is greater than said first threshold value ($\Theta_1$).

**15.** Apparatus for the suppression of spike noise in a noise-corrupted modulated digital signal (s(n)) in accordance with any one of the claims from 12 to 14, **characterised in that** it comprises derivation means (18) for generating a derivative signal (s'(n)) representative of the derivative of said noise-corrupted modulated digital signal (s(n)), said processing means (12) being able to receive said derivative signal (s'(n)) in input and to apply a non-linear Teager-Kaiser function ($\Psi$) to said derivative signal (s'(n)) to generate a second signal ($s_2\Psi(n)$, $s_4\Psi(n)$) having a third component ($s_2\Psi(n)_1$, $s_4\Psi(n)_1$), representative of the energy content ($\Theta_S$) of the derivative of said noise-corrupted digital signal (s'(n)), and a fourth component ($s_2\Psi(n)_2$, $s_4\Psi(n)_2$) able to identify at least one time position ($T=t_h\pm i$) in which there is spike noise in said noise-corrupted digital signal (s'(n)).

**16.** Apparatus for the suppression of spike noise in accordance with the claim from 12 to 15, **characterised in that** threshold generator means (14) are able to generate a second threshold value ($\Theta_2$) when said energy content ($\Theta_s$) of said first component ($s_1\Psi(n)_1$, $s_3\Psi(n)_1$) is less than said first threshold ($\Theta_1$), said second threshold value ($\Theta_2$) being function of the ratio between a numerator which identifies the derivative of said non-linear Teager-Kaiser function of the derivative of said modulated digital signal (x'(n)) uncorrupted by noise and a denominator which identifies the non-linear Teager-Kaiser function of the derivative of said noise-corrupted signal (x'(n)) at the preceding instant ($T=t_h-1$).

**17.** Apparatus for the suppression of spike noise in accordance with claim 16, **characterised in that** said suppression means (16) suppress in said at least one time position ($T=t_h\pm i$) in which there is spike noise in said noise-corrupted digital signal (s(n)) with another sample of said series of samples uncorrupted by noise when the energy content ($\Theta_s'$) of said third component ($s_2\Psi(n)_1$, $s_4\Psi(n)_1$) is greater than said second threshold value ($\Theta_2$).

**18.** Receiver (10) for receiving an analog radio frequency signal (s(t)), comprising analog-digital converter means (11) able to receive said analog signal (s(t)) in input to convert said analog signal (s(t)) into a digital signal (s(n)), said digital signal (s(n)) being a noise-corrupted modulated digital signal (s(n)), in particular spike noise, said receiver **characterised in that** it comprises an apparatus for the suppression of spike noise in said modulated digital signal (s(n)), said apparatus for the suppression of spike noise being in accordance with any one of the claims from 12 to 17.

**19.** Portable multimedia device comprising:

- a central unit and a plurality of circuits, said central unit being able to control the operation of said plurality of circuits, and said plurality of circuits comprising at least one interface chosen from the group comprising a video interface, a keyboard interface, a communication interface, a pen input interface, an audio interface or a combination of these,
- at least one antenna able to receive an analog radio frequency signal (s(t)),
- a receiver (10) having at least one signal input coupled to said at least one antenna for receiving said analog radio frequency signal (s(t)), said receiver (10) being in accordance with claim 18.

20. Computer product directly loadable into the memory of a numerical processor device, comprising portions of program code which can perform the method in accordance with any one of the claims from 1 to 11 when running on said processor device.

$\chi(t)$

$$\downarrow$$

| ADC | $\sim$ 1 |

$$\downarrow \chi(n)$$

$C(n) = C_{1,2}(n) \longrightarrow \oplus \sim 2$

$$\downarrow S(n)$$

| $\Psi_F$ | $\sim$ 3 |

$$\downarrow S_1\Psi(n), S_3\Psi(n)$$

**FIG.1**

$\chi(t)$

$$\downarrow$$

| ADC | $\sim$ 1 |

$$\downarrow \chi(n)$$

$C(n) = C_{1,2}(n) \longrightarrow \oplus \sim 2$

$$\downarrow S(n)$$

| d | $\sim$ 4 |

$$\downarrow S'(n)$$

| $\Psi_F$ | $\sim$ 3A |

$$\downarrow S_2\Psi(n), S_4\Psi(n)$$

**FIG.2**

$\chi(t)$

ADC ⎯⎯ 1

$\chi(n)$

$C(n) = C_{1,2}(n)$ → ⊗ ⎯⎯ 5

$S(n)$

$\Psi_F$ ⎯⎯ 3

FIG.3

$S_5\Psi(n), S_6\Psi(n)$

FIG.4

EP 1 909 399 A1

FIG.5

EP 1 909 399 A1

S(n),S'(n)

EP 1 909 399 A1

13

13A    13B    13C    13D    13E    13I

13F    13G    13H

FIG.6

**EP 1 909 399 A1**

European Patent Office

## EUROPEAN SEARCH REPORT

Application Number

EP 06 42 5685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HASSANPOUR, H.; MESBAH, M.; BOASHASH, B.;: "A time-frequency approach for spike detection" PROCEEDINGS OF THE 2003 10TH IEEE INTERNATIONAL CONFERENCE ON ELECTRONICS, CIRCUITS AND SYSTEMS, 2003. ICECS 2003, 17 December 2003 (2003-12-17), pages 56-59, XP002421866 * paragraph [02.1] *<br>----- | 1-20 | INV.<br>H04B1/10 |
| X | DUNN R B ET AL: "Detection of transient signals using the energy operator" STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, vol. VOL. 4, 27 April 1993 (1993-04-27), pages 145-148, XP010110667 ISBN: 0-7803-0946-4 equation (4a) * paragraph [02.1] *<br>----- | 1,20 | |
| A | US 2004/216260 A1 (GENET SOPHIE [FR] ET AL) 4 November 2004 (2004-11-04) * figure 4 * * paragraph [0035] - paragraph [0037] * * figure 8 * * paragraph [0067] - paragraph [0070] *<br>----- | 1-20 | TECHNICAL FIELDS SEARCHED (IPC)<br><br>H04B |

The present search report has been drawn up for all claims

| Place of search | Date of completion of the search | Examiner |
|---|---|---|
| Berlin | 5 March 2007 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

26

**ANNEX TO THE EUROPEAN SEARCH REPORT
ON EUROPEAN PATENT APPLICATION NO.**

EP 06 42 5685

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2007

| Patent document cited in search report | Publication date | Patent family member(s) | Publication date |
|---|---|---|---|
| US 2004216260 A1 | 04-11-2004 | CA 2446216 A1 | 14-11-2002 |
| | | DE 60112047 D1 | 25-08-2005 |
| | | DE 60112047 T2 | 01-06-2006 |
| | | WO 02090156 A1 | 14-11-2002 |
| | | EP 1256497 A1 | 13-11-2002 |
| | | ES 2246286 T3 | 16-02-2006 |
| | | MX PA03010189 A | 16-03-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4127070

**Non-patent literature cited in the description**

- **JAMES F. KAISER.** On a Simple Algorithm to Calculate the Energy of a Signal. *PROC. ICASSP,* 1990, vol. S7.3, 381-384